# EUROPEAN PATENT SPECIFICATION

(11) **EP 0 884 679 B1**
(45) Date of publication and mention of the grant of the patent: **24.02.2010**
(21) Application number: 97201569.7
(22) Date of filing: 28.05.1997
(51) Int. Cl.: G06F 9/46

(54) **Method of handling interactions between data processes**
Verfahren zum Abhandeln von Interaktionen zwischen Datenprozessen
Méthode pour traiter des interactions entre des processus de traitement de données

(43) Date of publication of application: 16.12.1998
(73) Proprietor: TELEFONAKTIEBOLAGET LM ERICSSON (publ), 164 83 Stockholm (SE)
(72) Inventor: Peeren, René Jacobus, 4901 HA Oosterhout (NL)
(74) Representative: Dohmen, Johannes Maria Gerardus

(56) References cited:
- EP-A- 0 107 263
- WO-A-93/20511
- GB-A- 2 273 800
- CHANG R N ET AL: "A SERVICE ACQUISITION MECHANISM FOR SERVER-BASED HETEROGENEOUS DISTRIBUTED SYSTEMS" IEEE TRANSACTIONS ON PARALLEL AND DISTRIBUTED SYSTEMS, vol. 5, no. 2, 1 February 1994, pages 154-169, XP000440134

## Description

### Field of the Invention

The present invention relates to data processing in a computer system and, more particularly, to the interaction between data processes for the use of process-specific resources.

### Background of the Invention

In modern electronic data processing, a number of resources are shared by a number of different processes of a computer system. The resources can be allocated to a particular process on a permanent or a temporary bases. Provisions have been made such to prevent that processes accidently use eachother resources.

In order to optimize resource sharing, a resource currently allocated or owned by a process must be available to another process if an application runned by such process requires support from a particular resource. Accordingly, provisions have to me made such that processes can interact in order to use resources of eachother.

In a known interaction method, the processes use a common resource, usually a memory, to which they have access to. In this common memory, the processes may read or write messages, data and other information relevant to the required process interaction.

For example, a first process which has to use a resource that is currently owned by a second process has to send a message to the second process via the common memory. The second process will read and interpret the message, and subsequently will interact with the required resource according to the request of the first process.

This is a passive type of interaction, in the sense that a process which writes into the common memory does not know if or when the other process will read from the memory.

In another known method of handling interactions between processes, the common memory is used to exchange messages between processes under control of a process scheduler. In its most general form, this known type of interaction does not restrict separate applications from reserving the same resource, but not at the same time. Once a message is stored by a sending process, this message is scheduled by the process scheduler for receipt by the intended receiving process, which subsequently will read the message.

This is an active type of interaction, since the sending process knows that the receiving process will respond to the message under control of the process scheduler.

In general, several applications run concurrently on a process. The applications may use one or several of the shared resources, such that if another process requires support from a particular resource, the resource has to be accessed following a protocol which can be application dependend. Any limitations that the protocol puts on the use of a resource will automatically restrict how other applications can use the same resource. Further, processes requesting service from a resource need to have information concerning the protocol to apply, which information has to be available on application level.

In a limited type of process interaction, only a specific application may own a particular resource, such that for obtaining service from such a resource always the same particular protocol applies.

Although in this limited version a less information content for access to resources between processes is required, each request towards the shared resource will cause a switch from one process context to another. This context switching is relatively expensive in terms of processing time and processing power. Further, applications will not be able to make full use of a shared resource, because of limitations put on the access of a resource by a particular application owning the resource.

This limited process interaction handling offers a high security against accidental use of resources by different processes. However, in case all processes belong to a suit of tightly integrated applications, security is of less importance and only overhead is created by the limitation that only a particular application may own a particular resource.

The paper by Chang, R. N. et al.: "A Service Acquisition Mechanism for Server-Based Heterogeneous Distributed Systems", IEEE Transactions on Parallel and Distributed Systems, vol. 5, no. 2, 1 February 1994, pages 154 - 169 discloses a system for managing and using networked resources in large heterogeneous distributed systems comprising many autonomous servers. The managing system is composed of a service acquisition manager, service specification interpreters, service access monitors and server access agents. The service acquisition manager responds to client requests by creating a service specification interpreter and a service access monitor per service acquisition. The server access agents are locally activated by the service specification interpreters.
International patent application WO 93/020511 discloses an integrated remote execution system for managing resources, which provides for the distributed and remote execution of remote requests to those resources in a heterogeneous computer network environment that have a plurality of resources loosely coupled to each other. The resources include at least two or more computer processors executing different operating system programs and any memory devices and subordinate programs operating together with the computer processors. Three major components are integrated into a single system by providing for a common remote execution interface that is incorporated into the requesting application program to provide a single programming interface for making remote requests to the system, a separate resource management component to provide information about the various resources in the network, and a remote service routine that can be executed on any of the computer processors selected to perform the remote request. The remote execution interface may allow the user to select or may automatically selects which resource to use.

### Summary of the Invention

It is an object of the present invention to provide a novel method of handling process interactions not requiring context switching on application level.

It is in particular an object of the present invention to provide a method of handling process interactions in modern data processing systems, wherein a process runs a number of threads. A thread is a stream of instructions to be executed by a process on behalf of an application or task.

These and other objects and advantages of the present invention are achieved by a method of handling interactions between data processes in a computer system for the use of process-specific resources owned by the data processes, characterized by comprising the steps of:
comprising access providers by the data processes, the access providers allowing instructions and data of threads to be transferred to the data processes comprising the access providers, a thread being a stream of instructions and data to be executed by the data processes;
allocating the process-specific resources owned by the data processes to an access provider of a respective data process owning a respective process-specific resource;
transferring instructions and data of a thread via an access provider, for the thread being scheduled for processing by the data process owning a process-specific resource allocated to the access provider;
processing the thread by the data process comprising the access provider via which instructions and data of said thread are transferred in accordance with the stream of instructions and data forming the thread, and using the or each process-specific resource allocated to the access provider via which instructions and data of said thread are transferred.

In the method according to the invention, due to the access providers, a thread in a process can communicate directly with a resource and does not has to rely on the interface offered by an application of the process owning a particular resource. A thread, either a home thread, i.e. a thread generated internal to the process which owns the resource, or a visiting thread, i.e. a thread from a second process external to the process owning the resource from which service is required, is processed by the process owning the resource following a processing algorithm or instructions and data provided by the thread.

A thread may start in a first process and than continue in a second process by keeping its own context, i.e. its data and instructions to be runned. Once the thread runs in the second process, an application on the first process can use local calls to a resource, i.e. a resource allocated to the access provider through which the thread from the first process has entered the second process. Accordingly, context switching on an application level is not required in the method according to the present invention.

In a further embodiment of the invention, resources are preferably uniquely allocated to an access provider of the process owning the particular resource. This to have less complex access providers. Further, resources may be on a permanent or a temporary bases allocated to an access provider, dependent on the applications currently running on a process and requiring shared resources, for example.

The access providers in the method according to the present invention perform the operation of a door to a process. Several threads may require service from a particular access provider. Accordingly, in another embodiment of the invention, the access providers allow for scheduling of entered threads. Entering an access provider means that the threads will be scheduled for the process that owns the access provider. All other processing related information and code or instructions that are thread-specific, such as its own stack and heap, are carried to the new process. Amongst others, this will be thread-specific data which is thus transferred from the first process to the second process.

If several threads from the same first process are visiting the same second process through the same door, i.e. the same access provider, all these visiting threads may form a team. For the purpose of information exchange between threads of a team, in a further embodiment of the invention, shared memory of said second process is reserved for such team. Information exchange between the threads may be either passively, through a heap, or actively through the posting of messages. No other threads in the second process are allowed access to the shared memory of the team.

In another embodiment of the method according to the invention, the shared memory comprises information for the return of visiting threads to their originating process. That is, they are again scheduled for the first process such that the door function provided by an access provider can be regarded as a private door.

When entering doors, threads effectively move from one process to another. Following the method of the invention, in an embodiment, it is provided for that if a thread enters a door any process related resources reserved for the thread and data that cannot be transferred to the second process (e.g. the thread heap) are released in the process left by the thread, i.e. the above first process.

Restrictions which can be put on visiting threads are such that a visiting thread is not allowed to release resources owned by the process visited by the thread and/or in that a thread may only visit a single process. This mechanism provides security to the handling of interactions between processes, for example to avoid undetectable circular relations of visiting threads. Further restrictions may be put on the number of teams in a process, for example.

In particular, in such cases wherein resources are temporarily allocated to processes, in a yet further embodiment of the invention, a data base is maintained comprising information concerning the allocation of access providers and shared resources. A process requiring a resource first refers to this data base.

The method according to the present invention is particularly of advantage in a client-server architecture, used in telecommunication switching systems, for example. In such architectures, services are applications running on server processes of the switching system, whereas clients are separate applications requiring service from resources owned by servers, which clients run on a particular client process, for example.

Different from the known Remote Procedure Call (RPC) client-server architecture based on the above known process interactions, the method according to the invention, used in a client-server architecture, does not suffer from the inefficient context-switching between client and server processes.

The method according to the invention may also be used in a telecommunication switching network, comprising several processing nodes. Entering a door, i.e. an access provider, may provide access to another physical node and implies to this node part of an application running in a process requiring access to the node.

In general, with the method according to the present invention, the amount of interaction between processes is minimized and depends merely on the application requiring service from a shared resource, and not on the application that currently owns the particular resource. Accordingly, each application in a process can also optimize its interaction. Further, for an operating environment, it is less complex to supervise relations between processes since these relations are completely control led by the access providers, i.e. the doors to a resource and process. The operating environment does not have to rely on proper behaviour of applications to maintain the relations between interacting processes. It will be appreciated by those skilled in the art that with a method according to the invention, data processing systems can be made more robust, which is a requirement in telecommunication systems for which high demands on reliability exist, for example.

The above-mentioned and other features and advantages of the invention are illustrated in the following description with reference to the enclosed drawings.

### Brief Description of the Drawings

Figure 1 shows, in a schematic and illustrative manner, process interaction between two processes according to a prior art method.

Figure 2 shows, in a schematic and illustrative manner, process interaction between two processes following the method according to the invention.

### Description of the Embodiments

Without the intention of a limitation, and merely for illustrative purposes, the following description refers to the interaction of two processes. In general, several processes may interact, dependent on a particular data processing environment.

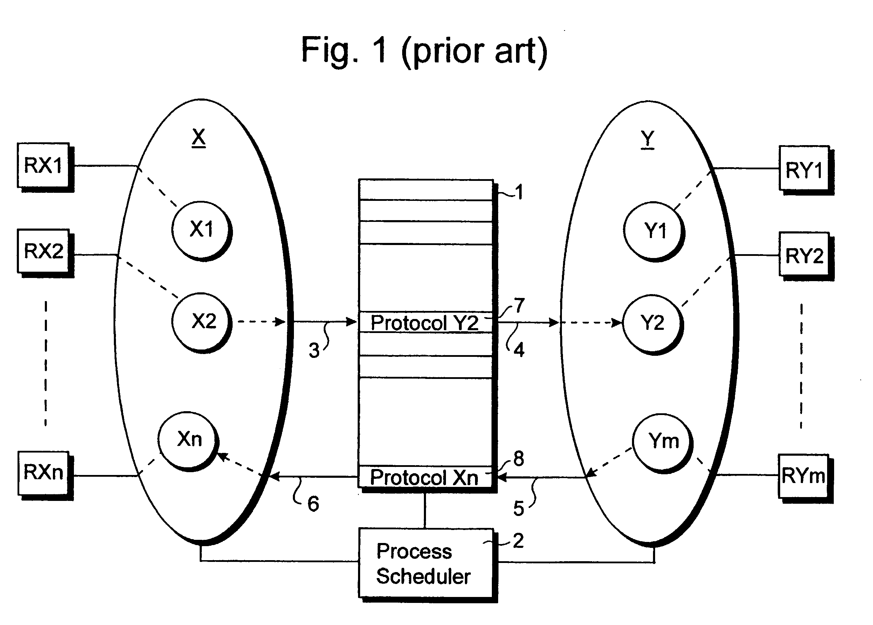

Figure 1 shows a first process, i.e. process X and a second process, i.e. process Y, which processes are schematically illustrated by ellipses.

A process runs several applications. In the embodiment shown, on process X applications X1, X2,...., Xn run, and on process Y application Y1, Y2,...., Ym. Applications are shown in the form of circles. The number of applications running on a single process is not relevant for the invention.

Process X owns resources RX1, RX2,...., RXn whereas process Y owns resources RY1, RY2,...., RYm. For the purpose of disclosure of the prior art method, it is assumed that each application owns a single different resource, which is indicated by lines running from a particular application to a corresponding resource.

To allow interaction between process X and Y, a common memory 1, and a so-called process scheduler 2 are provided. The process scheduler 2 connects to both processes X and Y, as well as to the common memory 1. Each process is allowed to read and write into the common memory 1, illustratively indicated by arrows 3, 4, 5, 6.

As will be appreciated by those skilled in the art, the processes X and Y are data processes implemented on a processing device such as a microprocessor or microcomputer. The resources RX1, RX2,...., RXn and RY1, RY2,...., RYm may comprise registers, stacks, and the like bearing data to be used by a particular application, either an application of process X or an application running on process Y.

It is assumed that application X2 in process X needs service from resource RY2 which is currently owned by process Y. Accordingly, process X sends a message to the common memory 1, as indicated by arrow 3. This message follows the protocol of application Y2 of process Y, i.e. designated protocol Y2, which is stored in memory position 7 of common memory 1.

Under the control of the process scheduler 2, the message in memory position 7 is scheduled for receipt by process Y, which will interpret the message and subsequently will be read by application Y2 of process Y, as indicated by arrow 4.

Application Y2 now will interact with the resource RY2 in accordance with the requirements of application X2 in process X as laid down in the message transferred. Thus, process X is responsible for posting a message such that process Y will interact with the resource according to the requirements of process X. In other words, the application Y2 of process Y offers an interface and corresponding protocol towards other applications, such as application X2 running on process X. Any limitations that the protocol of application Y2 in process Y imposes on the use of the resource RY2 will automatically restrict in what manner other applications can use that specific resource.

Similarly, an application Ym running on process Y can require service from a resource RXn which is currently allocated to application Xn in process X. A message posted by application Ym, indicated by arrow 5, following a protocol set by application Xn, i.e. protocol Xn, is stored at memory position 8 in the common memory 1. The process scheduler 2 schedules this message for receipt by process X, and the application Xn of which subsequently will read the message, i.e. arrow 6, and will interact with resource RXn following the message by the application Ym.

Although not shown, other applications in a process may require service from a particular resource, for example application X1 in process X may also require service from resource RY2 by posting a message in the common memory 1.

The process scheduler 2 schedules the messages such that service will be provided to all applications, however not at the same time. As shown above, each application may require a different protocol to be used. Without additional provisions on application level, the several processes have to know the particularities of the protocols required by the applications which currently have reserved a particular resource. This also applies in case the applications running in both processes are the same.

The above described matter of sharing resources by posting messages in a common memory is also referred to as an active interaction process, since the sending process knows that the receiving process will respond to the message under the control of the process scheduler.

In a similar type of process interactions, however without the control of a process scheduler 2, messages are also posted in the common memory 1. However, with the absence of a process scheduler, the sending process does not know if or at what point in time the receiving process will respond to the message. This type of process interaction is also referred to as passive, in the sense that their is no active control of the process interactions by a process scheduler.

From the above, it will be appreciated that the operating environment switches from one process context to another each time service is required from a shared resource. This is relatively inefficient and expensive in terms of processing time, for example.

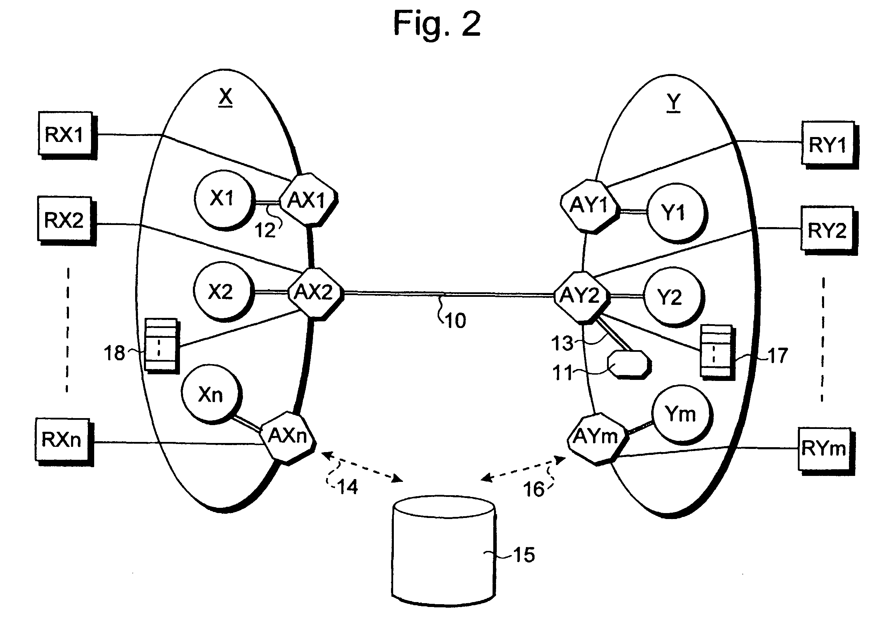

Figure 2 shows, in a schematic and illustrative manner, process interactions according to the present invention. For the sake of clarity, again only two processes X and Y are considered, on each of which a number of application X1, X2,...., Xn respectively Y1, Y2,...., Ym run. Further, process X owns a plurality of shared resources RX1, RX2,...., RXn and the process Y owns shared resources RY1, RY2,...., RYm.

In accordance with the present invention, each of the processes X, Y comprises access providers AX1, AX2,...., AXn and AY1, AY2,...., AYm, respectively. In figure 2, for illustrative purposes, the access providers are indicated by blocks. In practical implementations, access providers are software routines created by and/or running in a particular process on a computer system.

Shared resources owned by a process are allocated to the access providers of the process, such as shared resource RX1 being allocated to access provider AX1, resource RX2 being allocated to access provider AX2, resource RXn being allocated to access provider AXn, resource RY1 being allocated to access provider AY1, resource RY2 being allocated to access provider AY2 and resource RYm being allocated to access provider AYm, for example.

The access providers perform the function of door to a shared resource. Accordingly, the applications, X1, X2,...., Xn running on the process X have to require service from a shared resource RX1, RX2,...., RXn through the respective access providers, AX1, AX2,...., AXn of the process X, respectively. Likewise, applications Y1, Y2,...., Ym running on the process Y are provided access to the shared resources RY1, RY2,...., RYm through the respective access providers AY1, AY2,...., AYm, respectively.

Following the invention, application X2 of process X, for example, requiring service form the shared resource RY2 owned by process Y and allocated to access provider AY2, has to visit process Y through the access provider AY2 by means of a thread 10. Entering the access provider AY2, i.e. the door to the visited process Y, means that the thread 10 will be scheduled for processing by process Y and the resource RY2. For illustrative purposes, threads are shown by dual continues lines.

Once the thread 10 runs in process Y, i.e. the process Y runs instructions 11 belonging to the application X2 and independent of the particular application Y2 of the process Y, the application X2 can use local calls to the shared resource RY2 without requiring context-switching on application level. Because the thread 10 is originated in the process X but runs in the process Y, this thread 10 is referred to as a visiting thread. The process X that issued the thread is called the home process or source process and the process Y is called the visiting process or the target process. Following this terminology, an application such as the application X1 requiring service from the shared resource RX1 has to issue a home thread 12 via its access provider AX1.

The instructions or algorithm 11 performed by the process Y for the application X1 of the process X runs on a separate thread 13 within process Y. Not only instructions or code but also data may be transferred from process X to process Y. Such data to be transferred will be stored on the threads heap or the whole heap (i.e. the reference to a heap) of the thread can be moved. I.e. the thread keeps it's heap.

Shared resources can be uniquely allocated to access providers. However, in a dynamic processing environment, the most efficient use of shared resources can be made by allocating the shared resources on a temporarily bases to a process, i.e. an access provider thereof.

In order to speed up processing, information has to be provided concerning the allocation of access providers and shared resources. In the embodiment shown, a data base 15 is provided, operatively coupled to the processes X and Y, such as indicated by dashed arrows 14, 16. A process requiring service from a shared resource first will refer to the data base 15 in order to retrieve the access provider to which the particular resource is allocated. Once established, a thread can be started to require service from the resource through the respective access provider, as disclosed above.

The data base 15 has to contain enough information for the operating environment to schedule threads for the visited process, and if necessary, to set references to general process resources, such as particular code to be applied in the visited process by all threads visiting the particular process.

If several threads from the same home process require access to the same visiting process, all such visiting threads may be referred to as a team. In some processes, exchange of information is required amongst such threads. In order to facilitate such a requirement, in the visited process a shared area of memory 17, 18 is reserved for a team, through which visiting threads may exchange information. Either passively, via their heap or actively via the posting of messages, for example.

Threads can only move from one source process to a target process via an access provider (door) allocated to the target process.

A visiting thread that needs to return to the home process therefore requires an access provider in the home process. To avoid that every home process needs to create access providers with references to be stored in database 15, processes may create access providers the references of which will only be known to threads having such process as their home process. These access providers act as private doors as opposed to public doors that have their references stored in database 15. Threads receive a reference to the private door from their parent thread.

In effect, private doors are references to processes, but threads only know the reference to their home process; any other process can only be accessed via access providers having their references stored in database 15.

Some restrictions can be applied to all visiting threads. For example, visiting threads should generally not be allowed to release the resources owned by the visited process. Further, visiting threads may no be allowed to visit multiple processes in cascade, such to avoid undetectable circular relations. Restrictions may also be applied to the number of teams visiting a particular process. Once the limit has been reached, no new team may visit the process. However, threads from home processes that already have a team in a visiting process may still be allowed to enter the particular process. The number of threads in a team may be restricted too.

In general, in order to provide efficient usage of (scarce) shared resources, the operating environment has to ensure that if a thread enters an access provider, i.e. a door, any process related resource owned by the thread has to be released in the process originating the thread. The operating environment can optionally ensure that visiting threads will only access particular resources and some general resources, for example.

As will be appreciated from the above description of the invention, in case of interactions between processes, a process does not have to rely on the interface to a shared resource offered by an application currently owning the resource. Since, according to the invention, a process communicates directly with the shared resource via the access provider to which the resource is (currently) allocated. Calls to a shared resource are always local within a process. No context switching between processes is required. In general, following the method to the invention, the amount of interaction between process is minimized and depends on the application that needs service from a resource and not on the application that currently ownes a resource. Accordingly, processing can be optimized with respect to the required interactions. Operating environments only have to supervise relations between processes which are completely controlled by the access providers, which results in robust systems.

In particular, the present invention can be advantageously used in telecommunication switching systems, in particular switching systems operating in accordance with a client-server process architecture. In such architecture, servers and clients are separate applications. Servers are applications which reserve resources and may offer a so-called Remote Procedure Call (RPC) protocol towards clients allowing access to the resources.

The method according to the invention may also be advantageously used on a network level in a telephone switching network, comprising several processing nodes. Entering a door, i.e. an access provider, to another physical node implies downloading of part of the application to the other node, for example.

The mechanism of downloading affects part of the application's software, namely the remaining set of instructions for the thread being transferred (and at least until instructions are encountered to move the thread again to another process). An application will not be aware of this mechanism; it will not know whether the thread will be visiting another process in the same, or a different node.

This because the reference stored in database 15 is not the actual reference to the process: it is the public address of the public door, which will be translated to an actual address when a thread attempts to visit it.

A person skilled in the art will appreciate that the invention is not limited to the above disclosed use thereof in a telephone switching environment, rather the invention may be applied in other types of multiple process interactions in parallel processing or multi-task computer systems.

## Claims

1. A method of handling interactions between data processes (X; Y) in a computer system for the use of process-specific resources (RX1, RX2, ...., RXn; RY1, RY2, ...., RYm) owned by said data processes (X, Y), **characterized by** comprising the steps of:
comprising access providers (AX1, AX2 ...., AXn; AY1, AY2, ...., AYm) by said data processes (X, Y), said access providers (AX1, AX2 ...., AXn; AY1, AY2, ...., AYm) allowing instructions and data of threads to be transferred to said data processes (X, Y) comprising said access providers (AX1, AX2 ...., AXn; AY1, AY2, ...., AYm), a thread being a stream of instructions and data to be executed by said data processes (X, Y);
allocating said process-specific resources (RX1, RX2, ...., RXn; RY1, RY2, ...., RYm) owned by said data processes (X, Y) to an access provider (AX1, AX2 ...., Axn; AY1, AY2, ...,. AYm) of a respective data process (X, Y) owning a respective process-specific resource (RX1, RX2, ...., RXn; RY1, RY2, ...., RYm);
transferring instructions and data of a thread via an access provider (AX1, AX2 ...., AXn; AY1, AY2, ...., AYm), for said thread being scheduled for processing by said data process (X, Y) owning a process-specific resource (RX1, RX2, ...., RXn; RY1, RY2, ...., RYm) allocated to said access provider (AX1, AX2 ...., AXn; AY1, AY2, ...., AYm);
processing said thread by said data process (X, Y) comprising said access provider (AX1, AX2 ...., AXn; AY1, AY2, ...., AYm) via which instructions and data of said thread are transferred in accordance with said stream of instructions and data forming said thread, and using the or each process-specific resource (RX1, RX2, ...., RXn; RY1, RY2, ...., RYm) allocated to said access provider (AX1, AX2 ...., AXn; AY1, AY2, ...., AYm) via which instructions and data of said thread are transferred.

2. A method according to claim 1, wherein resources (RX1, RX2, ...., RXn; RY1, RY2, ...., RYm) owned by a process (X; Y) are uniquely allocated to an access provider (AX1, AX2, ...., AXn; AY1, AY2, ...., AYm) of said process (X; Y).

3. A method according to any of the previous claims, wherein the or each resource (RX1, RX2, ...., RXn; RY1, RY2, ...., RYm) is temporarily owned by a process (X; Y) and is temporarily allocated to an access provider (AX1, AX2, ...., AXn; AY1, AY2, ...., AYm) of said process (X; Y).

4. A method according to any of the previous claims, wherein said thread (10,12, 13) is a thread (12) generated from the process (X; Y) which ownes the or each resource (RX1, RX2, ...., RXn; RY1, RY2, ...., RYm), i.e. a home thread (12).

5. A method according to any of the previous claims, wherein said thread (10, 12, 13) is a thread (13)generated from a process (X; Y) different than the process (X; Y) which currently owns the or each resource (RX1, RX2, ...., RXn; RY1, RY2, ...., RYm), i.e. a visiting thread (13).

6. A method according to claim 5, wherein if a plurality of threads of a first process (X; Y) visit the same access provider (AX1, AX2, ...., AXn; AY1, AY2, ...., AYm) of a second process (X; Y), said threads (10, 12, 13) may exchange information through shared memory (17, 18) of said second process (X; Y) private to said visiting threads (13).

7. A method according to claim 6, wherein said shared memory (17, 18) comprises information for the return of visiting threads (13) to their originating process (X; Y).

8. A method according to any of the previous claims, wherein process-specific resources (RX1, RX2, ...., RXn; RY1, RY2, ...., RYm) of a thread (10, 12, 13) originating from a first process (X; Y) and visiting a second process (X; Y) are released in said first process (X; Y).

9. A method according to any of the previous claims, wherein threads (10, 12, 13) are not allowed to release resources (RX1, RX2, ...., RXn; RY1, RY2, ...., RYm) owned by a process (X; Y) visited by a thread.

10. A method according to any of the previous claims, wherein a thread (10, 12, 13) may only visit a single process (X; Y).

11. A method according to any of the previous claims, wherein an access provider (AX1, AX2, ...., AXn; AY1, AY2, ...., AYm) comprises references to general resources (RX1, RX2, ...., RXn; RY1, RY2, ...., RYm).

12. A method according to any of the previous claims, wherein a data base (15) is maintained comprising information concerning the allocation of access providers (AX1, AX2, ...., AXn; AY1, AY2, ...., AYm) and resources (RX1, RX2, ...., RXn; RY1, RY2, ...., RYm), wherein a process (X; Y) requiring a resource (RX1, RX2, ...., RXn; RY1, RY2, ...., RYm) first refers to said data base (15).

13. Use of the method according to any of the previous claims in a telecommunication switching system.

14. Use of the method according to claim 13, where the telecommunication switching system operates in accordance with a client-server process architecture.

15. Use of the method according to any of the claims 1-12 in a telecommunication switching network comprising several processing network nodes.

## Patentansprüche

1. Verfahren zum Handhaben von Interaktionen zwischen Datenprozessen (X; Y) in einem Computersystem für die Verwendung von Prozess-spezifischen Ressourcen (RX1, RX2, ..., RXn; RY1, RY2, ..., RYm), die durch die Datenprozesse (X; Y) besessen werden, **gekennzeichnet durch** die Schritte:
Einschließen von Zugangsanbietern (AX1, AX2, ..., AXn; AY1, AY2, ..., AYm) **durch** die Datenprozesse (X, Y), wobei die Zugangsanbieter (AX1, AX2, ..., AXn; AY1, AY2, ..., AYm) es Anweisungen und Daten von Threads (Fäden) erlauben, zu den Datenprozessen (X; Y) einschließlich Zugangsanbietern (AX1, AX2, ..., AXn; AY1, AY2, ..., AYm) übertragen zu werden, wobei ein Thread ein Strom von Anweisungen und Daten ist, die von den Datenprozessen (X; Y) ausgeführt werden sollen;
Allozieren der Prozess-spezifischen Ressourcen (RX1, RX2, ..., RXn; RY1, RY2, ..., RYm), die **durch** die Datenprozesse (X; Y) besessen werden, zu einem Zugangsanbieter (AX1, AX2, ..., AXn; AY1, AY2, ..., AYm) eines jeweiligen Datenprozesses (X; Y), der eine jeweilige Prozess-spezifische Ressource (RX1, RX2, ..., RXn; RY1, RY2, ..., RYm) besitzt;
Übertragen von Anweisungen und Daten eines Threads über einen Zugangsanbieter (AX1, AX2, ..., AXn; AY1, AY2, ..., AYm) für den Thread, der zum Verarbeiten **durch** den Datenprozess (X; Y) geplant ist, der eine Prozess-spezifische Ressource (RX1, RX2, ..., RXn; RY1, RY2, ..., RYm) besitzt, die zu dem Zugangsanbieter (AX1, AX2, ..., AXn; AY1, AY2, ..., AYm) alloziert ist;
Verarbeiten des Threads **durch** den Datenprozess (X; Y) einschließlich des Zugangsanbieters (AX1, AX2, ..., AXn; AY1, AY2, ..., AYm), über den Anweisungen und Daten des Threads übertragen werden, gemäß dem Strom von Anweisungen und Daten, die den Thread bilden, und Verwenden der oder jeder Prozess-spezifischen Ressource (RX1, RX2, ..., RXn; RY1, RY2, ..., RYm), die zu dem Zugangsanbieter (AX1, AX2, ..., AXn; AY1, AY2, ..., AYm) alloziert ist, über den Anweisungen und Daten des Threads übertragen werden.

2. Verfahren nach Anspruch 1, wobei Ressourcen (RX1, RX2, ..., RXn; RY1, RY2, ..., RYm), die durch einen Prozess (X; Y) besessen werden, eindeutig zu einem Zugangsanbieter (AX1, AX2, ..., AXn; AY1, AY2, ..., AYm) des Prozesses (X; Y) alloziert werden.

3. Verfahren nach einem der vorangehenden Ansprüche, wobei die oder jede Ressource (RX1, RX2, ..., RXn; RY1, RY2, ..., RYm) temporär von einem Prozess (X; Y) besessen wird und temporär zu einem Zugangsanbieter (AX1, AX2, ..., AXn; AY1, AY2, ..., AYm) des Prozesses (X; Y) alloziert wird.

4. Verfahren nach einem der vorangehenden Ansprüche, wobei der Thread (10, 12, 13) ein Thread (12) ist, der von dem Prozess (X; Y) erzeugt wird, der die oder jede Ressource (RX1, RX2, ..., RXn; RY1, RY2, ..., RYm) besitzt, d.h. ein Home-Thread (12).

5. Verfahren nach einem der vorangehenden Ansprüche, wobei der Thread (10, 12, 13) ein Thread (13) ist, der von einem Prozess (X; Y) erzeugt wird, der unterschiedlich zu dem Prozess (X; Y) ist, der gegenwärtig die oder jede Ressource (RX1, RX2, ..., RXn; RY1, RY2, ..., RYm) besitzt, d.h. ein besuchender Thread.

6. Verfahren nach Anspruch 5, wobei, falls eine Vielzahl von Threads eines ersten Prozesses (X; Y) den gleichen Zugangsänbieter (AX1, AX2, ..., AXn; AY1, AY2, ..., AYm) eines zweiten Prozesses (X; Y) besuchen, die Threads (10, 12, 13) Information durch einen gemeinsam geteilten Speicher (17, 18) des zweiten Prozesses (X; Y) austauschen können, der für die besuchenden Threads (13) privat ist.

7. Verfahren nach Anspruch 6, wobei der gemeinsam geteilte Speicher (17, 18) Information für die Rückgabe der besuchenden Threads (13) zu ihrem Ursprungsprozess (X; Y) umfasst.

8. Verfahren nach einem der vorangehenden Ansprüche, wobei Prozess-spezifische Ressourcen (RX1, RX2, ..., RXn; RY1, RY2, ..., RYm) eines Threads, der von einem ersten Prozess (X; Y) stammt und einen zweiten Prozess (X; Y) besucht, in dem ersten Prozess (X; Y) freigegeben werden.

9. Verfahren nach einem der vorangehenden Ansprüche, wobei Threads (10, 12, 13) keine Ressourcen (RX1, RX2, ..., RXn; RY1, RY2, ..., RYm) freigeben dürfen, die von einem Prozess (X; Y) besessen werden, der durch einen Thread besucht wird.

10. Verfahren nach einem der vorangehenden Ansprüche, wobei ein Thread (10, 12, 13) lediglich einen einzelnen Prozess (X; Y) besuchen darf.

11. Verfahren nach einem der vorangehenden Ansprüche, wobei ein Zugangsanbieter (AX1, AX2, ..., AXn; AY1, AY2, ..., AYm) Referenzen zu allgemeinen Ressourcen (RX1, RX2, ..., RXn; RY1, RY2, ..., RYm) umfasst.

12. Verfahren nach einem der vorangehenden Ansprüche, wobei eine Datenbasis (15) mit Information hinsichtlich der Allokation von Zugangsanbietern (AX1, AX2, ..., AXn; AY1, AY2, ..., AYm) und Ressourcen (RX1, RX2, ..., RXn; RY1, RY2, ..., RYm) aufrecht erhalten wird, wobei ein Prozess (X; Y), der eine Ressource (RX1, RX2, ..., RXn; RY1, RY2, ..., RYm) erfordert, zunächst auf die Datenbank (15) verweist.

13. Verwendung des Verfahrens nach einem der vorangehenden Ansprüche in einem Telekommunikationsschaltsystem.

14. Verwendung des Verfahrens nach Anspruch 13, wobei das Telekommunikationsschaltsystem gemäß einer Client-Server-Prozessarchitektur arbeitet.

15. Verwendung des Verfahrens nach einem der Ansprüche 1-12 in einem Telekommunikationsschaltnetzwerk mit mehreren Verarbeitungsnetzwerkknoten.

## Revendications

1. Procédé de gestion des interactions entre des processus de données (X ; Y), sur un système informatique, pour l'utilisation de ressources spécifiques aux processus (RX1, RX2, ..., RXn ; RY1, RY2, ..., RYm) détenues par lesdits processus de données (X ; Y), **caractérisé en ce qu'**il comprend les étapes consistant à :
contenir des fournisseurs d'accès (AX1, AX2, ..., Axn ; AY1, AY2, ..., Aym) dans lesdits processus de données (X ; Y), lesdits fournisseurs d'accès (AX1, AX2, ..., Axn ; AY1, AY2, ..., Aym) permettant à des instructions et des données de fils d'exécution d'être transférées auxdits processus de données (X ; Y) qui comprennent lesdits fournisseurs d'accès (AX1, AX2, ..., Axn ; AY1, AY2, ..., Aym), un fil d'exécution étant un flux d'instruction et de données à exécuter par lesdits processus de données (X ; Y) ;
attribuer lesdites ressources spécifiques aux processus (RX1, RX2, ..., RXn ; RY1, RY2, .... RYm), détenues par lesdits processus de données (X ; Y), à un fournisseur d'accès (AX1, AX2, ..., Axn ; AY1, AY2, ..., Aym) d'un processus de données (X ; Y) respectif détenant une ressource spécifique au processus (RX1, RX2, ..., RXn ; RY1, RY2, ..., RYm) respective ;
transférer des instructions et des données d'un fil d'exécution via un fournisseur d'accès (AX1, AX2, ..., Axn ; AY1, AY2, ..., Aym) pour que ledit fil d'exécution soit ordonnancé pour traitement par ledit processus de données (X ; Y) détenant une ressource spécifique au processus (RX1, RX2, ..., RXn ; RY1, RY2, ..., RYm) attribuée audit fournisseur d'accès (AX1, AX2, ..., Axn ; AY1, AY2, ..., Aym) ;
traiter ledit fil d'exécution par ledit processus de données (X ; Y) comprenant ledit fournisseur d'accès (AX1, AX2, ..., Axn ; AY1, AY2, ..., Aym) par lequel des instructions et des données dudit fil d'exécution sont transférées, conformément audit flux d'instructions et de données qui forme ledit fil d'exécution, et utiliser la ou chaque ressource spécifique aux processus (RX1, RX2, ..., RXn ; RY1, RY2, ..., RYm) attribuées audit fournisseur d'accès (AX1, AX2 , ..., Axn ; AY1, AY2, ..., Aym) par lequel des instructions et des données dudit fil d'exécution sont transférées.

2. Procédé selon la revendication 1, dans lequel des ressources (RX1, RX2, ..., RXn ; RY1, RY2, ..., RYm) détenues par un processus (X ; Y) sont uniquement attribuées à un fournisseur d'accès (AX1, AX2, ..., Axn ; AY1, AY2, ..., Aym) dudit processus (X ; Y).

3. Procédé selon l'une quelconque des revendications précédentes, dans lequel la ou chaque ressource spécifique aux processus (RX1, RX2, ..., RXn ; RY1, RY2, ..., RYm) est détenue temporairement par un processus (X ; Y) et est temporairement attribuée à un fournisseur d'accès (AX1, AX2, ..., Axn ; AY1, AY2, ..., Aym) dudit processus (X ; Y).

4. Procédé selon l'une quelconque des revendications précédentes, dans lequel ledit fil d'exécution (10, 12, 13) est un fil d'exécution (12) produit par le processus (X ; Y) qui détient la ou chaque ressource spécifique aux processus (RX1, RX2, ..., RXn ; RY1, RY2, ..., RYm), c'est-à-dire un fil d'exécution natif (12).

5. Procédé selon l'une quelconque des revendications précédentes, dans lequel ledit fil d'exécution (10, 12, 13) est un fil d'exécution (13) produit par un processus (X ; Y) qui est différent du processus (X ; Y) qui détient actuellement la ou chaque ressource spécifique aux processus (RX1, RX2, ..., RXn ; RY1, RY2, ..., RYm), c'est-à-dire un fil d'exécution visiteur (13).

6. Procédé selon la revendication 5, dans lequel, si une pluralité de fils d'exécution d'un premier processus (X ; Y) visite le même fournisseur d'accès (AX1, AX2, ..., Axn ; AY1, AY2, ..., Aym) d'un second processus (X ; Y), lesdits fils d'exécution (10, 12, 13) peuvent échanger des informations via une mémoire partagée (17, 18) dudit second processus (X ; Y) qui est privée et réservée auxdits fils d'exécution visiteurs (13).

7. Procédé selon la revendication 6, dans lequel ladite mémoire partagée (17, 18) comprend des informations sur le retour des fils d'exécution visiteurs (13) à leur processus (X ; Y) d'origine.

8. Procédé selon l'une quelconque des revendications précédentes, dans lequel des ressources spécifiques aux processus (RX1, RX2, ..., RXn ; RY1, RY2, ..., RYm) d'un fil d'exécution (10, 12, 13) provenant d'un premier processus (X ; Y) et visitant un second processus (X ; Y) sont libérées dans ledit premier processus (X ; Y).

9. Procédé selon l'une quelconque des revendications précédentes, dans lequel les fils d'exécution (10, 12, 13) ne sont pas autorisés à libérer des ressources (RX1, RX2, ..., RXn ; RY1, RY2, ..., RYm) détenues par un processus (X ; Y) visité par un fil d'exécution.

10. Procédé selon l'une quelconque des revendications précédentes, dans lequel un fil d'exécution (10, 12, 13) ne peut visiter qu'un seul processus (X ; Y).

11. Procédé selon l'une quelconque des revendications précédentes, dans lequel un fournisseur d'accès (AX1, AX2, ... , Axn ; AY1, AY2, ... , Aym) comprend des références à des ressources générales (RX1, RX2, ..., RXn ; RY1, RY2, ..., RYm) .

12. Procédé selon l'une quelconque des revendications précédentes, dans lequel une base de données (15) est maintenue, laquelle contient des informations concernant l'attribution de fournisseurs d'accès (AX1, AX2, ..., Axn ; AY1, AY2, ..., Aym) et de ressources (RX1, RX2, ..., RXn ; RY1, RY2, ..., RYm), dans lequel un processus (X ; Y) demandant une ressource (RX1, RX2, ..., RXn ; RY1, RY2, ..., RYm) consulte d'abord ladite base de données (15).

13. Utilisation du procédé selon l'une quelconque des revendications précédentes dans un système de commutation de télécommunications.

14. Utilisation du procédé selon la revendication 13, dans lequel le système de commutation de télécommunications fonctionne selon une architecture de processus client-serveur.

15. Utilisation du procédé selon l'une quelconque des revendications 1 à 12 dans un système de commutation de télécommunications comprenant plusieurs noeuds réseau de traitement.
